# EUROPÄISCHE PATENTSCHRIFT

(11) **EP 0 410 441 B1**
(45) Veröffentlichungstag und Bekanntmachung des Hinweises auf die Patenterteilung: **26.05.1993**
(21) Anmeldenummer: 90114323.0
(22) Anmeldetag: 26.07.1990
(51) Int. Cl.: B60K 23/04, B60K 17/346

(54) **Ausgleichgetriebesperre für Kraftfahrzeuge**
Differential gear locking device for motor vehicles
Verrouillage d'engrenage différentiel pour automobiles

(30) Priorität: 28.07.1989 AT 1823/89
(43) Veröffentlichungstag der Anmeldung: 30.01.1991
(73) Patentinhaber: STEYR-DAIMLER-PUCH AKTIENGESELLSCHAFT, 1010 Wien (AT)
(72) Erfinder: Reif, Johann Peter, Dipl.-Ing. Dr., A-5360 St. Wolfgang (AT); Wichart, Klaus, Dipl.-Ing. Dr., A-1120 Wien (AT); Nötstaller, Josef, Dipl.-Ing., A-4400 Steyr (AT)
(74) Vertreter: Kovac, Werner

(56) Entgegenhaltungen:
- EP-A- 0 282 187
- DE-A- 3 732 811
- GB-A- 2 140 104
- PATENT ABSTRACTS OF JAPAN vol. 14, no. 91 (M-0938)(4034) 20 Februar 1990, & JP-A-01 301415 (MAZDA) 05 Dezember 1989,
- PATENT ABSTRACTS OF JAPAN vol. 012, no. 208 (M-709) 15 Juni 1988, & JP-A-63 011430 (AISIN WARNER) 18 Januar 1988,

## Beschreibung

Die Erfindung betrifft eine Ausgleichgetriebesperre für Kraftfahrzeuge, die automatisch betätigbar ist, wobei das Ausgleichgetriebe eine Antriebswelle und zwei Abtriebswellen aufweist und ein elektronisches Steuergerät vorgesehen ist, dem Betriebsdaten von mindestens zwei der Wellen eingegeben werden.

Ausgleichgetriebesperren gemäß dem Oberbegriff des Anspruches 1 sind gebräuchlich. Insbesondere ist es aus der Praxis bekannt, als Ausgleichgetriebesperre eine Lamellenkupplung bzw. eine Mehrscheiben-Reibungskupplung vorzusehen, die den Vorteil der leichten Betätigbarkeit, d.h. den Vorteil des leichten Zu- und Ausschaltens mit sich bringt. Nachteilig hiebei ist aber, daß eine völlige Sperrwirkung ein verhältnismäßig großes Bauvolumen bzw. große Reibflächen voraussetzt und daß das Erkennen schwierig ist, wann die eingerückte Sperre wieder geöffnet werden kann bzw. soll. Dem Steuergerät werden mit Hilfe eigener Sensoren die Drehzahlen der entsprechenden Wellen eingegeben, wobei die Sperre dann in Kraft treten soll, wenn aufgrund des Schlupfes eines oder mehrerer Räder des Kraftfahrzeuges auf der Fahrbahn höhere Drehzahldifferenzen auftreten. Um nun zu erkennen, wann wieder die erforderliche Haftung aller Räder auf der Fahrbahn gegeben ist, muß die Sperre bzw. die Kupplung in vergleichsweise kurzen Zeitabständen immer wieder geöffnet werden, um die jeweiligen Drehzahldifferenzen der Räder zu messen und in deren Abhängigkeit die Sperre wieder einzurücken oder geöffnet zu lassen.

Es sind als Ausgleichgetriebesperre auch schon formschlüssige Kupplungen, in der Regel Klauenzahnkupplungen bekannt, die zwar bei voller Sperrwirkung vergleichsweise kleine Abmessungen aufweisen, bisher aber nicht automatisch betätigbar sind und ebenfalls kaum erkennen lassen, wann die Sperre wieder zu öffnen ist. Als schwerwiegender Nachteil kommt, jedoch noch hinzu, daß sich die Klauen od. dgl. der als Ausgleichgetriebesperre dienenden formschlüssigen Kupplung im verspannten Zustand kaum oder überhaupt nicht voneinander lösen lassen. Wird aber eine verspannte formschlüssige Kupplung mit hohem Kraftaufwand doch gelöst, so kommt es zu geführlichen Schlägen im Antriebsstrang des Kraftfahrzeuges.

Der Erfindung liegt somit die Aufgabe zugrunde, diese Mängel zu beseitigen und eine Ausgleichgetriebesperre der eingangs geschilderten Art zu schaffen, die selbständig ein- und ausrückbar ist, ohne im gesperrten Zustand ein häufig wiederkehrendes Lösen der Kupplung zur jeweiligen Messung der Raddrehzahldifferenzen vornehmen zu müssen.

Die Erfindung löst die gestellte Aufgabe dadurch, daß an den Wellen Sensoren zur laufenden Drehmomenterfassung angeordnet und im Steuergerät ein der Fahrfußhebelstellung und dem gewählten Getriebegang des Kraftfahrzeuges zugeordneter Drehmomentgrenzwert für das Einschalten und das Verhältnis zweier Drehmomente zum Ausschalten der Ausgleichgetriebesperre gespeichert sind.

Es wird also nicht mehr die Wellendrehzahl gemessen bzw. die Drehzahldifferenz bestimmt, sondern es werden mittels geeigneter Sensoren, z. B. Kraftmeßbolzen oder Dehnungsmeßstreifen, die Drehmomente in der Regel an zwei der insgesamt drei Wellen laufend gemessen, wobei sich dann das Drehmoment an der dritten Welle aus der Bestimmung ergibt, daß die Summe der drei Drehmomente gleich Null sein muß. Stellt das Steuergerät vergleichend fest, daß trotz Betätigung des Fahrfußhebels und in Anbetracht des gewählten Getriebeganges bei geschlossener Fahrkupplung eines der gemessenen Drehmomente den zugehörigen gespeicherten Drehmomentgrenzwert erreicht oder unterschreitet, so wird vom Steuergerät ein Signal an die selbstverständlich vorhandene Betätigungsvorrichtung der Ausgleichgetriebesperre geliefert und die Sperre mit Hilfe der Betätigungsvorrichtung eingeschaltet. Um zu erkennen, wann die Sperre wieder gelöst werden kann, bedarf es keines wiederholten Öffnens der Sperre, sondern es erfolgt im Steuergerät ein ständiger Vergleich der eingegebenen gemessenen Drehmomente bzw. des aus diesen errechneten Drehmomentes mit der systemeigenen Lösebedingung für die Ausgleichgetriebesperre, welche Lösebedingung durch das Verhältnis zweier Drehmomente in ihrer Größe definiert ist. Ist die Gleichheit erreicht, so kommt vom Steuergerät ein Impuls an die Betätigungsvorrichtung der Ausgleichgetriebesperre im Lösesinne.

In weiterer Ausbildung der Erfindung ist die Ausgleichgetriebesperre in an sich bekannter Weise als formschlüssige Kupplung ausgebildet und insbesondere für ein Ausgleichgetriebe eines Verteilergetriebes bestimmt, wobei dann das Steuergerät bei Erreichen des Drehmomentverhältnisses zum Ausschalten der Ausgleichgetriebesperre einen Impuls zur Drehmomentveränderung im Antriebsstrang oder in einem Abtriebsstrang des Ausgleichgetriebes liefert.

Da die Ausgleichgetriebesperre als formschlüssige Kupplung ausgebildet ist, wird trotz vergleichsweise kleiner Baumaße eine vollständige Sperrwirkung erzielt. Dennoch aber sind keine Schwierigkeiten beim Ausrücken der Sperre wegen etwaiger Verspannungen zu befürchten, weil das Steuergerät außer dem Impuls an die Betätigungsvorrichtung der Ausgleichgetriebesperre bzw. der Kupplung einen weiteren Impuls zur Drehmomentveränderung im Antriebsstrang oder in einem Abtriebsstrang des Ausgleichgetriebes liefert und dadurch eventuelle Verspannungen zwischen den ineinandergreifenden Kupplungselementen aufhebt. Der Impuls zur Drehmomentveränderung kann darin bestehen, daß einer der An- bzw. Abtriebsstränge kurzzeitig gebremst wird oder eine kurzzeitige Beschleunigung des Antriebsstranges erfolgt, was im Fahrbetrieb kaum bemerkbar ist.

In der Zeichnung ist der Erfindungsgegenstand beispielsweise dargestellt, und zwar zeigen
- Fig. 1: die wesentlichen Teile eines Verteilergetriebes mit Ausgleichgetriebe und einer formschlüssigen Kupplung als Sperre im Axialschnitt und
- Fig. 2: ein entsprechendes Blockschema für die elektronische Steuerung.

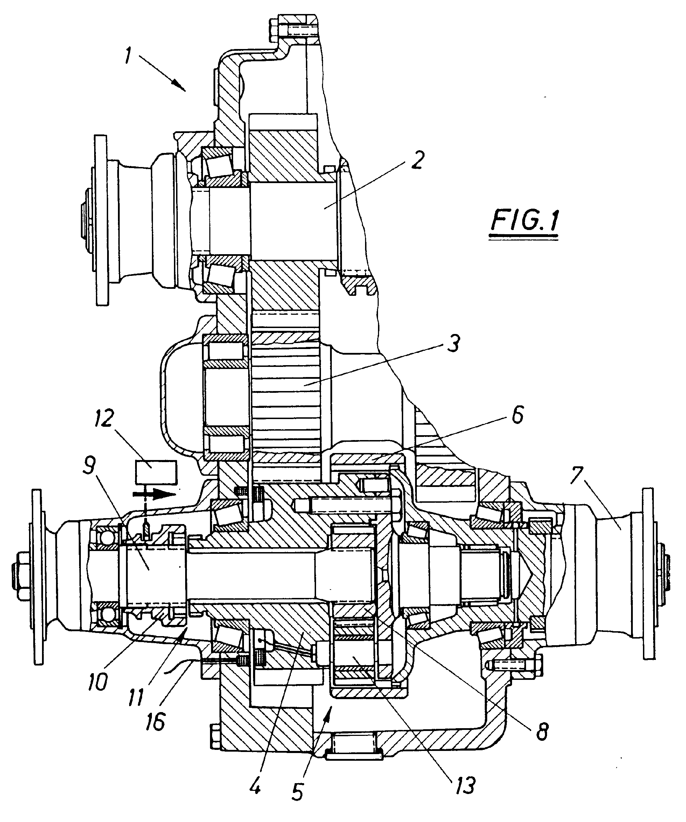

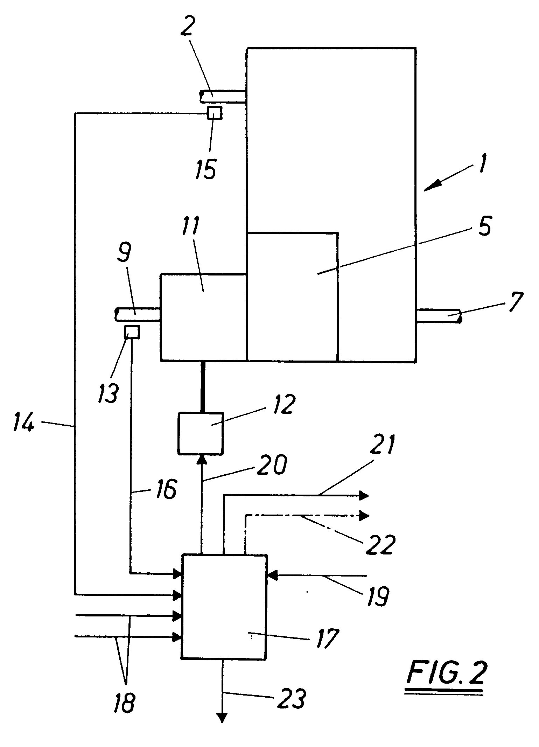

In Fig. 1 sind die wesentlichen Teile eines zwischen der Vorder- und Hinterachse eines allradgetriebenen Kraftfahrzeuges angeordneten Verteilergetriebes 1 dargestellt, wobei die Getriebeantriebswelle 2 mit dem Motor des Kraftfahrzeuges über die nicht dargestellte Fahrkupplung verbunden ist. Die Antriebswelle 2 treibt über ein Zwischenrad 3 den Planetenradträger 4 eines insgesamt mit 5 bezeichneten Ausgleichgetriebes an. Das Hohlrad 6 dieses Ausgleichgetriebes 5 ist mit der zur Hinterachse führenden Abtriebswelle 7 drehfest verbunden, wogegen vom Sonnenrad 8 die zur Vorderachse führende Abtriebswelle 9 angetrieben wird. Auf der Abtriebswelle 9 ist die Schiebemuffe 10 einer Zahnklauenkupplung 11 drehfest gelagert, mit deren Hilfe der Planetenradträger 4 und die Abtriebswelle 9 starr gekuppelt werden können, so daß diese Kupplung 11 eine Ausgleichgetriebesperre ergibt. Zum Verschieben der Muffe 10, also zur Betätigung der Kupplung 11, d. h. zum Einrücken und Lösen der Ausgleichgetriebesperre, dient eine nur schematisch angedeutete Vorrichtung 12, die beispielsweise mit Druckluft gegen Federkraft arbeitet. Im Planetenradträger 4 ist ein Kraftmeßbolzen 13 als Achse für das entsprechende Planetenrad gelagert, wobei die vom Kraftmeßbolzen 13 gelieferten Werte induktiv in die Leitung 16 übertragen werden, so daß sich ein laufendes Erfassen des Drehmomentes der Abtriebswelle 9 ergibt. Für das an der Antriebswelle 2 auftretende Drehmoment ist ebenfalls ein geeigneter Sensor 15 (Fig. 2) vorgesehen.

Die von dem Sensor 15 und von dem auch als Sensor wirkenden Kraftmeßbolzen 13 erfaßten Drehmomentwerte werden über die Leitungen 14 und 16 einem Steuergerät 17 eingegeben, das über die Leitungen 18 auch Signale erhält, ob sich die Ausgleichgetriebesperre 11 jeweils im ausgerückten oder eingerückten Zustand befindet. Ferner kann über die Leitung 19 von der elektronischen Steuerung auf manuelle Betätigung der Ausgleichgetriebesperre 11 umgeschaltet werden. Vom Steuergerät 17 führt eine Leitung 20 zur Betätigungsvorrichtung 12 der Ausgleichgetriebesperre 11 und eine weitere Leitung 21 zur Ansteuerung der Bremse eines Fahrzeugrades, um das Lösen der Sperre durch einen kurzen Lastwechsel zu ermöglichen. Anstelle oder gemeinsam mit der Ansteuerung der Bremse könnte über die Leitung 22 auch die Regelstange der Einspritzpumpe des Kraftfahrzeugmotors verstellt werden. Schließlich führt die Leitung 23 zu einem Anzeigegerät, um dem Fahrer erkenntlich zu machen, ob die Ausgleichgetriebesperre 11 eingerückt ist oder nicht.

## Patentansprüche

1. Ausgleichgetriebesperre für Kraftfahrzeuge, die automatisch betätigbar ist, wobei das Ausgleichgetriebe (5) eine Antriebswelle (2) und zwei Abtriebswellen (7,9) aufweist und ein elektronisches Steuergerät (17) vorgesehen ist, dem Betriebsdaten von mindestens zwei der Wellen eingegeben werden, **dadurch gekennzeichnet,** daß an den Wellen (2,7,9) Sensoren (13,15) zur laufenden Drehmomenterfassung angeordnet und im Steuergerät (17) ein der Fahrfußhebelstellung und dem gewählten Getriebegang des Kraftfahrzeuges zugeordneter Drehmomentgrenzwert für das Einschalten der Ausgleichgetriebesperre (11) und das Verhältnis zweier Drehmomente zum Ausschaltern dieser Ausgleichgetriebesperre (11) gespeichert sind.

2. Ausgleichgetriebesperre nach Anspruch 1, **dadurch gekennzeichnet,** daß die Ausgleichgetriebesperre in an sich bekannter Weise als formschlüssige Kupplung (11) ausgebildet und insbesondere für ein Ausgleichgetriebe (5) eines Verteilergetriebes (1) bestimmt ist und daß das Steuergerät (17) bei Erreichen des Drehmomentverhältnisses zum Ausschalten der Ausgleichgetriebesperre (11) einen Impuls zur Drehmomentveränderung im Antriebsstrang oder in einem Abtriebsstrang des Ausgleichgetriebes (5) liefert.

## Claims

1. A differential lock for motor vehicles, which is actuable automatically, the differential gear (5) comprising a driving shaft (2) and two driven shafts (7, 9), and an electronic control device (17) being provided, to which operating data from at least two of the shafts are fed, **characterized in that** sensors (13, 15) are arranged on the shafts (2, 7, 9) for the continuous detection of torque, and a torque threshold value - correlated with the position of the accelerator pedal and the selected gear of the motor vehicle - for engaging the differential lock (11) and the ratio of two torques for disengaging the said differential lock (11) are stored in the control device (17).

2. A differential lock according to Claim 1, **characterized in that** the differential lock is constructed in a manner known *per se* as a positively locking clutch (11) and is intended in particular for a differential gear (5) of a distributor gear (1), and when the control device (17) reaches the torque ratio for disengaging the differential lock (11) it delivers a pulse for changing the torque in the driving train or in a driven train of the differential gear (5).

## Revendications

1. Moyen de blocage d'un différentiel pour véhicules automobiles, qui est actionnable automatiquement, ce différentiel (5) ayant un arbre d'entrée (2) et deux arbres de sortie (7, 9), et avec lequel il es prévu un appareil (17) de commande électronique auquel sont fournies des données relatives au régime de fonctionnement de deux au moins desdits arbres, caractérisé en ce que sur les arbres (2, 7, 9) sont disposés des détecteurs (13, 15) pour la mesure en continu du couple transmis et, dans l'appareil de commande (17), sont mis en mémoire une valeur limite de couple transmis associée à la position de la pédale d'accélérateur et au rapport de transmission choisi de la boîte de vitesses du véhicule automobile pour la fermeture du moyen (11) de blocage du différentiel, ainsi que le rapport de deux couples transmis pour l'ouverture de ce moyen (11) de blocage du différentiel.

2. Moyen de blocage d'un différentiel selon la revendication 1, caractérisé en ce que, de façon connue en soi, ce moyen de blocage d'un différentiel est constitué par un accouplement (11) à encastrement de formes, et il est destiné en particulier à un différentiel (5) d'une boîte de transfert (1), et en ce que, lorsqu'est atteint le rapport des couples prévu pour l'ouverture du moyen (11) de blocage du différentiel, l'appareil de commande (17) fournit une impulsion pour la modification du couple par l'arbre d'entrée ou par un arbre de sortie du différentiel (5).
